# EUROPEAN PATENT APPLICATION

(11) **EP 4 791 000 A1**
(43) Date of publication of application: **12.08.2026**
(21) Application number: 24874976.4
(22) Date of filing: 04.10.2024
(51) Int. Cl.: H04N 19/70, H04N 19/31, H04N 19/172

(54) **VIDEO ENCODING/DECODING METHOD AND DEVICE BASED ON SUPPLEMENTAL ENHANCEMENT INFORMATION (SEI) MESSAGE, AND RECORDING MEDIUM FOR STORING BITSTREAM**

(30) Priority: 04.10.2023 US 202363542301 P
(71) Applicant: LG Electronics Inc., Yeongdeungpo-gu Seoul 07336 (KR)
(72) Inventor: TAN, Hendry, Seoul 06772 (KR); NAM, Junghak, Seoul 06772 (KR); LIM, Jaehyun, Seoul 06772 (KR); KIM, Seunghwan, Seoul 06772 (KR)
(74) Representative: Jung, Minkyu
(86) International application number: PCT/KR2024/015072
(87) International publication number: WO 2025/075420

(57) **Abstract**

Provided are a video encoding/decoding method and device. The video decoding method performed by a video decoding device according to the present disclosure comprises the steps of: receiving a bitstream including video information; and generating a reconstructed picture by reconstructing the current picture on the basis of the video information, wherein the video information may include a source picture timing information (SPTI) SEI message regarding a temporal distance between source pictures related to corresponding decoded pictures.

## Description

### [Technical Field]

The present disclosure relates to an image encoding/decoding method and apparatus, and a recording medium for storing a bitstream, and more particularly, to an image encoding/decoding method and apparatus based on a Supplemental Enhancement Information (SEI) message, and a recording medium for storing a bitstream generated by the image encoding method/apparatus of the present disclosure.

### [Background Art]

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### [Disclosure]

### [Technical Problem]

An object of the present disclosure is to provide an image encoding/decoding method and apparatus with improved encoding/decoding efficiency.

Another object of the present disclosure is to provide an image encoding/decoding method and apparatus for performing an intra prediction mode.

Another object of the present disclosure is to provide an image encoding/decoding method and apparatus for performing an inter prediction mode.

Another object of the present disclosure is to provide an image encoding/decoding method and apparatus based on a Supplemental Enhancement Information (SEI) message.

Another object of the present disclosure is to provide an image encoding/decoding method and apparatus including a source picture timing information (SPTI) SEI message in a bitstream.

Another object of the present disclosure is to provide a non-transitory computer-readable recording medium for storing a bitstream generated by an image encoding method or apparatus according to the present disclosure.

Another object of the present disclosure is to provide a non-transitory computer-readable recording medium for storing a bitstream received and decoded by an image decoding apparatus according to the present disclosure and used for reconstruction of an image.

Another object of the present disclosure is to provide a method of transmitting a bitstream generated by an image encoding method or apparatus according to the present disclosure.

The technical objects to be achieved by the present disclosure are not limited to those mentioned above, and other technical objects not mentioned herein will be clearly understood by those skilled in the art from the following description.

### [Technical Solution]

According to an embodiment of the present disclosure, an image decoding method performed by an image decoding apparatus may include receiving a bitstream including image information, and generating a reconstructed picture by reconstructing a current picture based on the image information, wherein the image information may include a Source Picture Timing Information (SPTI) SEI message related to a temporal interval between source pictures associated with corresponding decoded pictures of the source pictures.

According to an embodiment of the present disclosure, the SPTI SEI message may include persistence information specifying whether the SPTI SEI message applies only to the current decoded picture.

According to an embodiment of the present disclosure, the SPTI SEI message may include at least one of first information specifying a maximum number of temporal sublayers, second information specifying a scale factor used in determining the temporal interval between the source pictures, or third information specifying whether the current decoded picture included in a temporal sublayer is synthesized.

According to an embodiment of the present disclosure, the first information, the second information, and the third information may be obtained based on the persistence information.

According to an embodiment of the present disclosure, the first information, the second information, and the third information may be obtained based on the persistence information specifying that the SPTI SEI message is not only applied to the current decoded picture.

According to an embodiment of the present disclosure, the second information and the third information may be obtained further based on a value of the first information.

According to an embodiment of the present disclosure, based on the second information not being obtained, a value of the second information may be inferred to be equal to 1.

According to an embodiment of the present disclosure, based on the persistence information specifying that the SPTI SEI massage applies only to the current decoded picture, a source picture interval may be set to be equal to an elemental source picture interval.

According to an embodiment of the present disclosure, an image encoding method performed by an image encoding apparatus may include generating image information related to a current picture, and encoding a bitstream including the image information, wherein the image information may include a Source Picture Timing Information (SPTI) SEI message related to a temporal interval between source pictures associated with corresponding decoded pictures of the source pictures.

According to an embodiment of the present disclosure, there may be provided a computer-readable recording medium storing a bitstream generated by the image encoding method.

According to an embodiment of the present disclosure, a method of transmitting a bitstream generated by an image encoding method may include generating image information related to a current picture, and encoding the bitstream including the image information, wherein the image information may include a Source Picture Timing Information (SPTI) SEI message related to a temporal interval between source pictures associated with corresponding decoded pictures of the source pictures.

### [Advantageous Effects]

According to the present disclosure, an image encoding/decoding method and apparatus with improved encoding/decoding efficiency may be provided.

According to the present disclosure, an image encoding/decoding method and apparatus for performing an intra prediction mode may be provided.

According to the present disclosure, an image encoding/decoding method and apparatus for performing an inter prediction mode may be provided.

According to the present disclosure, an image encoding/decoding method and apparatus based on a Supplemental Enhancement Information (SEI) message may be provided.

According to the present disclosure, an image encoding/decoding method and apparatus including a source picture timing information (SPTI) SEI message in a bitstream may be provided.

According to the present disclosure, a non-transitory computer-readable recording medium for storing a bitstream generated by an image encoding method or apparatus according to the present disclosure may be provided.

According to the present disclosure, a non-transitory computer-readable recording medium for storing a bitstream received and decoded by an image decoding apparatus according to the present disclosure and used for reconstruction of an image may be provided.

According to the present disclosure, a method of transmitting a bitstream generated by an image encoding method or apparatus according to the present disclosure may be provided.

The effects obtainable from the present disclosure are not limited to those mentioned above, and other effects not mentioned herein will be clearly understood by those skilled in the art from the following description.

### [Brief Description of the Drawings]

FIG. 1 is a view schematically showing an example of a video coding system to which an embodiment of the present disclosure is applicable.
FIG. 2 is a view schematically showing an image encoding apparatus to which an embodiment of the present disclosure is applicable.
FIG. 3 is a view schematically showing an image decoding apparatus to which an embodiment of the present disclosure is applicable
FIG. 4 illustrates an example of a coding layer and structure to which an embodiment according to the present disclosure is applicable.
FIG. 5 is a flowchart of an image encoding method according to the present disclosure.
FIG. 6 is a flowchart of an image decoding method according to the present disclosure.
FIG. 7 is a view exemplarily showing a content streaming system to which an embodiment of the present disclosure is applicable.

### [Mode for Disclosure]

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, "video" may mean a set of a series of images over time.

In the present disclosure, a "picture" generally refers to a unit representing one image in a specific time period, and a slice/tile is a coding unit constituting a part of a picture, and one picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component

In the present disclosure, a "unit" may represent a basic unit of image processing. The unit may include at least one of a specific region of the picture and information related to the region. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

In the present disclosure, "at least one of A, B, and C" may mean "A only", "B only", "C only", or "any combinations of A, B, and C". In addition, "at least one of A, B or C" or "at least one of A, B and/or C" may mean "at least one of A, B, and C".

Parentheses used in the present disclosure may mean "for example". For example, "prediction (intra prediction)" may mean that "intra prediction" is proposed as an example of "prediction". In other words, "prediction" in the present disclosure is not limited to "intra prediction", and "intra prediction" may be proposed as an example of "prediction". In addition, even "prediction (i.e., intra prediction)" may be constructed as proposing "intra prediction" as an example of "prediction".

### Overview of video coding system

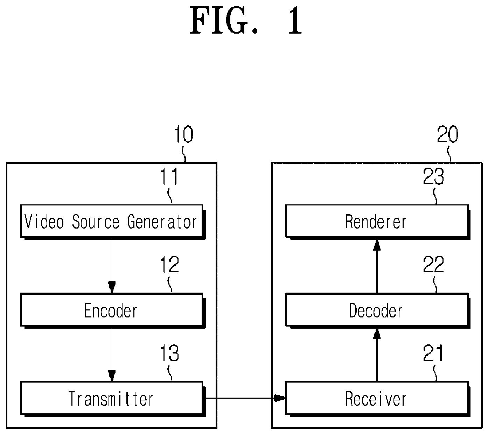

FIG. 1 is a view schematically showing an example of a video coding system to which an embodiment of the present disclosure is applicable.

The video coding system according to an embodiment may include an encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit (otherwise referred to as an encoder) 12 and a transmitter 13. The decoding apparatus 20 according to an embodiment may include a receiver 21, a decoding unit (otherwise referred to as a decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing, or generating the video/image. The video source generator 11 may include a video/image capture device and/or a video/image generating device. The video/image capture device may include, for example, one or more cameras, video/image archives including previously captured video/images, and the like. The video/image generating device may include, for example, computers, tablets and smartphones, and may electronically generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming data. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 12, and in this case, the transmission device may include at least one processor that acquires encoded video/image information or data output in the form of a bitstream and a transmission unit for transmitting it in the form of a file or streaming data. The receiver 21 may extract/receive the bitstream from the storage medium or network and transmit the bitstream to the decoding unit 22.

The decoding unit 2 may decode a video/image by performing dequantization, inverse transform, prediction, etc. corresponding to the operation of the encoding unit 12.

The renderer 23 may render the decoded video/image. The rendered video/image may be displayed through the display.

### Overview of image encoding apparatus

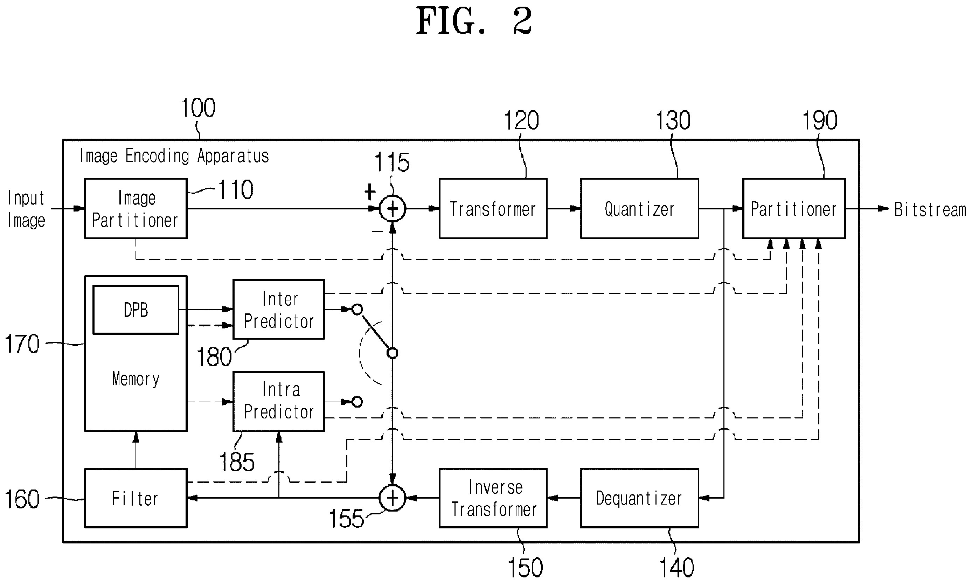

FIG. 2 is a view schematically showing an image encoding apparatus to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first, and the binary tree structure and/or ternary structure may be applied later. The coding procedure according to embodiments of the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit (intra predictor) 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit (inter predictor) 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may construct a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loeve transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

Luma mapping with chroma scaling (LMCS) may be applied in the picture encoding and/or reconstruction process.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

### Overview of image decoding apparatus

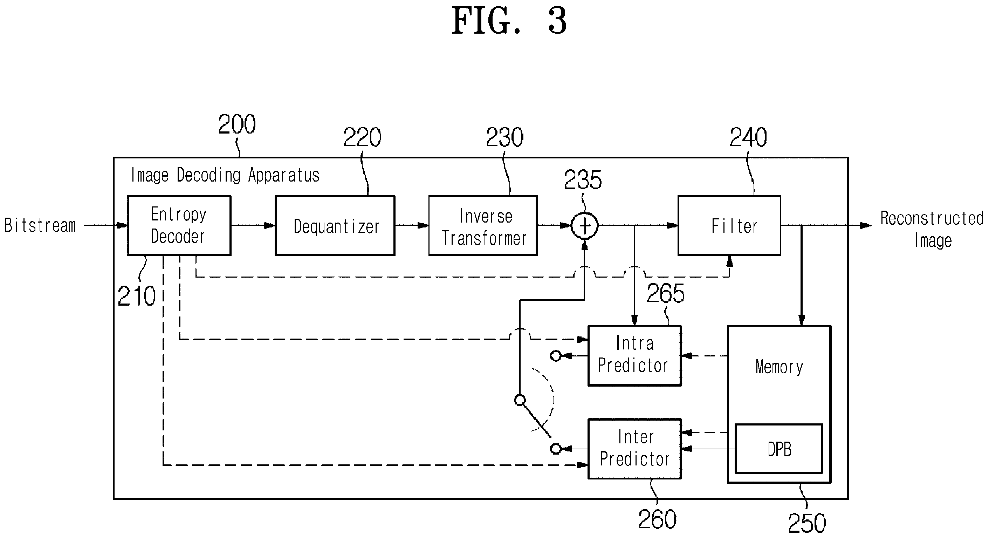

FIG. 3 is a view schematically showing an image decoding apparatus to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter prediction unit 260 and an intra prediction unit 265. The inter predictor (inter prediction unit) 260 and the intra predictor (intra prediction unit) 265 may be collectively referred to as a "prediction unit (predictor)". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and outputs values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter predictor 260, and the intra predictor 265 of the image decoding apparatus 200.

### Coding layer and structure

Coded video/images according to this document may be processed in accordance with, for example, coding layers and structures described below.

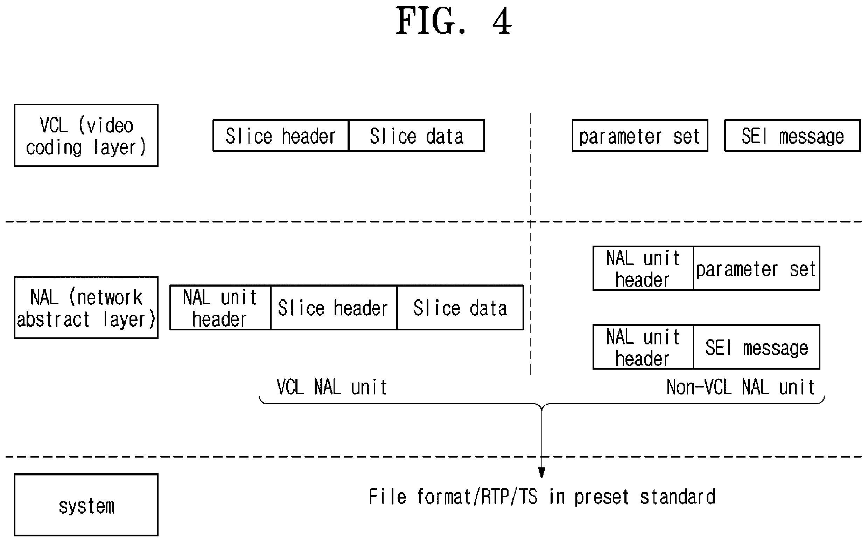

FIG. 4 is a diagram illustrating a layer structure for a coded image

A coded image is divided into a video coding layer (VCL) that handles the decoding process of an image and itself, a subsystem that transmits and stores the encoded information, and a network abstraction layer (NAL) that is in charge of a network adaptation function and present between the VCL and the subsystem.

In the VCL, VCL data including compressed image data (slice data) may be generated, or a parameter set including information such as a picture parameter set (PPS), a sequence parameter set (SPS), and a video parameter set (VPS), or a supplemental enhancement information (SEI) message additionally required for an image decoding process may be generated.

In the NAL, a NAL unit may be generated by adding header information (NAL unit header) to a raw byte sequence payload (RBSP) generated in a VCL. In this case, the RBSP refers to slice data, a parameter set, an SEI message, etc., generated in the VCL. The NAL unit header may include NAL unit type information specified according to RBSP data included in the corresponding NAL unit.

As shown in FIG. 4, the NAL unit may be classified into a VCL NAL unit and a Non-VCL NAL unit according to the RBSP generated in the VCL. The VCL NAL unit may mean a NAL unit that includes information on the image (slice data), and the Non-VCL NAL unit may mean a NAL unit that includes information (parameter set or SEI message) required for decoding the image.

The above-described VCL NAL unit and Non-VCL NAL unit may be transmitted through a network by attaching header information according to the data standard of the subsystem. For example, the NAL unit may be transformed into a data format of a predetermined standard such as an H.266/VVC file format, a real-time transport protocol (RTP), a transport stream (TS), etc., and transmitted through various networks.

As described above, the NAL unit may be specified with the NAL unit type according to the RBSP data structure included in the corresponding NAL unit, and information on the NAL unit type may be stored and signaled in the NAL unit header.

For example, the NAL unit may be classified into a VCL NAL unit type and a Non-VCL NAL unit type according to whether the NAL unit includes information (slice data) about an image. The VCL NAL unit type may be classified according to the nature and type of pictures included in the VCL NAL unit, and the Non-VCL NAL unit type may be classified according to the type of a parameter set.

The following is an example of the NAL unit type specified according to the type of parameter set included in the Non-VCL NAL unit type.
- APS (Adaptation Parameter Set) NAL unit : A type for a NAL unit including an APS
- DPS (Decoding Parameter Set) NAL unit : A type for a NAL unit including a DPS
- VPS (Video Parameter Set) NAL unit : A type for a NAL unit including a VPS
- SPS (Sequence Parameter Set) NAL unit: A type for a NAL unit including an SPS
- PPS (Picture Parameter Set) NAL unit : A type for a NAL unit including a PPS

The aforementioned NAL unit types may have syntax information for the NAL unit type, and the syntax information may be stored and signaled in the NAL unit header. For example, the syntax information may be nal_unit_type, and NAL unit types may be specified by a nal_unit_type value.

The slice header (slice header syntax) may include information/parameters that may be commonly applied to the slice. The APS (APS syntax) or the PPS (PPS syntax) may include information/parameters that may be commonly applied to one or more slices or pictures. The SPS (SPS syntax) may include information/parameters that may be commonly applied to one or more sequences. The VPS (VPS syntax) may include information/parameters that may be commonly applied to multiple layers. The DPS (DPS syntax) may include information/parameters that may be commonly applied to the overall video. The DPS may include information/parameters related to concatenation of a coded video sequence (CVS). In this document, high level syntax (HLS) may include at least one of the APS syntax, PPS syntax, SPS syntax, VPS syntax, DPS syntax, and slice header syntax.

In the present disclosure, the image/image information encoded by the image encoding apparatus 100 and signaled to the image decoding apparatus in the form of a bitstream may include not only in-picture partitioning related information, intra/inter prediction information, residual information, and in-loop filtering information, but also information included in the slice header, information included in the APS, information included in the PPS, information included in the SPS, and/or information included in the VPS.

### SEI messages - Source Picture Timing Information (SPTI)

The SPTI SEI message indicates the temporal distance between source pictures associated with the corresponding decoded output pictures prior to encoding. For example, for camera-captured content, the temporal distance between source pictures is the difference between the time at which an image sensor is exposed to produce a source picture associated with the current decoded picture and the time at which the image sensor is exposed to produce the source picture associated with a previous decoded picture in output order.

Table 1 below is an example of an SPTI SEI message syntax structure.

**[Table 1]**

| | |
|---|---|
| source_picture_timing_info( payloadSize ) { | **Descriptor** |
| **spti_cancel_flag** | u(1) |
| if( !spti_cancel_flag ) { | |
| **spti_persistence_flag** | u(1) |
| **spti_source_picture_timing_type** | u(8) |
| **spti_source_timing_equals_output_timing_flag** | u(1) |
| if( !spti_source_timing_equals_output_timing_flag ) { | |
| **spti_time_scale** | u(32) |
| **spti_num_units_in_elemental_source_picture_interval** | u(32) |
| **spti_max_sublayers_minus_1** | u(3) |
| for( i = 0; i <= spti_max_sublayers_minus1; i++ ) { | |
| **spti_sublayer_source_picture_interval_scale_factor**[ i ] | ue(v) |
| **spti_sublayer_synthesized_picture_flag**[ i ] | u(1) |
| } | |
| } | |
| } | |
| } | |

spti_cancel_flag equal to 1 may indicate that the SPTI SEI message cancels the persistence of any previous SPTI SEI message in output order that applies to the current layer. spti_cancel_flag equal to 0 may indicate that source picture timing information persists.

spti_persistence_flag may indicate the persistence of the SPTI SEI message for the current layer. spti_persistence_flag equal to 0 may indicate that the SPTI SEI message applies to the current decoded picture only. spti_persistence_flag equal to 1 may indicate that the SPTI SEI message applies to the current decoded picture and persists for all subsequent pictures of the current layer in output order until one or more of the following conditions (Conditions 1 to 3) are true.
- Condition 1: A new CLVS of the current layer begins.
- Condition 2: The bitstream ends.
- Condition 3: A picture in the current layer in an AU associated with an SPTI SEI message is output that follows the current picture in output order.

spti_source_picture_timing_type may indicate the timing relationship between source pictures and corresponding decoded output pictures as specified in Table 2, where, when (spti_source_picture_timing_type & bitmask) is not equal to 0, the interpretation related to the bitMask value in Table 2 is not applicable to the SPTI SEI message. When spti_source_picture_timing_type is equal to 0, the timing relationship may be specified by the application.

**[Table 2]**

| **bitMask** | **Interpretation** |
|---|---|
| 0x01 | Slow motion |
| 0x02 | Frame rate conversion |
| 0x04 | High-speed imaging |
| 0x08 | Time-lapse imaging |
| 0x10 | Temporal reversal |
| 0x20 | Still image / freeze frame |
| 0x40 | Sporadic or event-driven |

spti_source_timing_equals_output_timing_flag equal to 1 may indicate that the timing of source pictures is the same as the timing of corresponding decoded output pictures. spti_source_timing_equals_output_timing_flag equal to 0 may indicate the timing of source pictures may not be the same as the timing of corresponding decoded output pictures.

When spti_source_timing_equals_output_timing_flag is equal to 1 and a picture timing SEI message is present for the current picture, source picture timing may be determined from information carried in the picture timing SEI message.

spti_time_scale may indicate the number of time units that pass in one second. The value of spti_time_scale may not be equal to 0. For example, spti_time_scale for a time coordinate system that measures time using a 27 MHz clock may be 27,000,000.

spti_num_units_in_elemental_source_picture_interval may indicate the number of time units of a clock operating at the frequency spti_time_scale Hz that corresponds to the specified elemental source picture interval of consecutive pictures in output order in the CLVS. spti_max_sublayers_minus_1 plus 1 may indicate the maximum number of temporal sublayers that may be present in the CLVS.

spti_sublayer_source_picture_interval_scale_factor[i], when present, may indicate a scale factor used in determining the source picture interval of corresponding consecutive pictures in output order in the CLVS having TemporalId less than or equal to i. spti_sublayer_source_picture_interval_scale_factor[i] equal to 0 may be used to indicate that the source picture corresponding to the current decoded output picture is identical to the source picture corresponding to the previous decoded output picture.

spti_sublayer_synthesized_picture_flag[i], when present, equal to 1 may indicate that decoded output pictures belonging to the i-th temporal sublayer are synthesized and do not correspond to unmodified original source pictures. spti_sublayer_synthesized_picture_flag[i] equal to 0 may provide no such indication. When spti_sublayer_synthesized_picture_flag[i] is not present, the value of spti_sublayer_synthesized_picture_flag[i] may be inferred to be equal to 0.

Hereinafter, image encoding/decoding methods according to various embodiments of the present disclosure will be described in detail.

In the existing design of SPTI SEI message, syntax elements spti_max_sublayers_minus1, spti_sublayer_source_picture_interval_scale_factor[i], and spti_sublayer_synthesized_picture_flag[ i ] may be signaled regardless the persistence of the SEI message. These syntax elements may not be needed when the SEI message persists only for one picture (i.e., for picture in the same AU that contains the SEI message). Furthermore, when the persistence of the SPTI SEI applies only to the current picture, the computation of SourcePictureInterval[ ] and SourcePictureTime[ ] may not be necessary. To address these issues, the present disclosure proposes the following four solutions.
1. Signal syntax elements spti_sublayer_source_picture_interval_scale_factor[i] and spti_sublayer_synthesized_picture_flag[ i ] only when spti_persistence_flag is equal to 1.
2. Update the description related to SourcePictureInterval[ i ] and SourcePictureTime[ n ] such that they apply only when spti_persistence_flag is equal to 1.
3. When persistence of the SPTI SEI applies only to the current picture, set SourcePictureInterval to be equal to ElementalSourcePictureInterval.
4. Specify a constraint such that when spti_sublayer_source_picture_interval_scale_factor[i] is not present, the value is inferred to be equal to 1.

### Embodiment 1

In order to present solutions 1 to 3 among the four solutions described above, Embodiment 1 proposes to update the SPTI SEI message syntax structure as shown in Table 3 below. The SPTI SEI message syntax structure proposed in this embodiment is shown in Table 3 below.

**[Table 3]**

| | |
|---|---|
| source_picture_timing_info( payloadSize ) { | **Descriptor** |
| **spti_cancel_flag** | u(1) |
| if( !spti_cancel_flag ) { | |
| **spti_persistence_flag** | u(1) |
| **spti _source_picture_timing_type** | u(8) |
| **spti_source_timing_equals_output_timing_flag** | u(1) |
| if( !spti_source_timing**_**equals_output_timing_flag ) { | |
| spti_time_scale | u(32) |
| **spti_num_units_in_elemental_source_picture_interval** | u(32) |
| if( spti_persistence_flag ) { | |
| **spti_max_sublayers_minus1** | u(3) |
| if( spti max_sublayers_minus1 > 0 ) { | |
| for( i = 0; i <= spti_max_sublayers_minus1; i++ ) { | |
| **spti_sublayer_source_picture_interval_scale_factor**[ i ] | ue(v) |
| **spti_sublayer_synthesized_picture_flag**[ i ] | u(1) |
| } | |
| } | |
| } | |
| } | |
| } | |
| } | |

Referring to Table 3, spti_max_sublayers_minus1 may be signaled only when the value of spti_persistence_flag is equal to 1. spti_max**_**sublayers_minus_1 plus 1 may indicate the maximum number of temporal sublayers that may be present in the CLVS. When spti_max_sublayers_minus_1 is not present and spti_persistence_flag is equal to 0, spti_max**_**sublayers**_**minus1 may be inferred to be equal to 0.

spti_sublayer_source_picture_interval_scale_factor[i] may indicate a scale factor used in determining the source picture interval of corresponding consecutive pictures in output order in the CLVS having TemporalId less than or equal to i. for spti_sublayer_source_picture**_**interval**_**scale**_**factor[i] equal to 0 may indicate that the source picture corresponding to the current decoded output picture is identical to the source picture corresponding to the previous decoded output picture.

When spti_persistence_flag is equal to 1, the process in Table 4 below may be performed.

**[Table 4]**

| | | |
|---|---|---|
| When spti_persistence_flag is equal to 1, the following applies: | | |
| | The indicated source picture interval associated with output pictures having TemporalId less than or equal to i, denoted by the variable SourcePictureInterval[ i ], in units of seconds, is derived as follows: | |
| | | SourcePictureInterval[ i ] = ElementalSourcePictureInterval * |
| | | spti_sublayer_source_picture_interval_scale_factor[ i ] |
| | When picture n is a picture that is output having TemporalId less than or equal to i and is not the first picture of the bitstream that is output, the value of the variable SourcePictureTime[ n ] is derived as follows: | |
| | - If temporalReversalFlag is equal to 0, SourcePictureTime[ n ] = SourcePictureTime[ previousPicInOutputOrder ] + SourcePictureInterval[ i ] | |
| | - Otherwise, temporalReversalFlag is equal to 1, SourcePictureTime[ n ] = SourcePictureTime[ previousPicInOutputOrder ] - SourcePictureInterval[ i ] | |
| | where previousPicInOutputOrder is the last picture that is output having TemporalId less than or equal to i that precedes picture n in output order (if any). When the value of SourcePictureTime[ 0 ] is not provided by external means not specified in this document, the value of SourcePictureTime[ 0 ] is inferred to be 0. | |
| Otherwise (i.e., spti_persistence_flag is equal to 0), the following applies: | | |
| | The indicated source picture interval for source picture associated with output picture corresponds to the current picture and source picture associated with the output picture corresponds to the picture that follows the current picture in output order, denoted by the variable SourcePictureInterval, in units of seconds, and is set to be equal to ElementalSourcePictureInterval. | |

spti_sublayer_synthesized_picture_flag[i] equal to 1 may indicate that decoded output pictures belonging to the i-th temporal sublayer are synthesized and do not correspond to unmodified original source pictures. spti_sublayer_synthesized_picture_flag[i] equal to 0 may provide no such indication. That is, spti_sublayer_synthesized_picture_flag[i] equal to 0 may indicate that there is no such restriction. When not present, spti_sublayer_synthesized_picture_flag[ i ] may be inferred to be equal to 0.

### Embodiment 2

Embodiment 2 is an embodiment that materializes solution 4 among the four solutions described above. Embodiment 2 proposes to update the SPTI SEI message as shown in Table 5 below.

**[Table 5]**

| | |
|---|---|
| source_picture_timing_info( payloadSize ) { | **Descriptor** |
| **spti_cancel_flag** | u(1) |
| if( !spti_cancel_flag ) { | |
| **spti_persistence_flag** | u(1) |
| **spti_source_picture_timing_type** | u(8) |
| **spti_source_timing_equals_output_timing_flag** | u(1) |
| if( !spti_source_timing_equals_output_timing_flag ) { | |
| **spti_time_scale** | u(32) |
| **spti_num_units_in_elemental_source_picture_interval** | u(32) |
| if( spti_persistence_flag ) { | |
| **spti_max_sublayers_minus1** | u(3) |
| if( spti_max_sublayers_minus1 > 0 ) { | |
| for( i = 0; i <= spti_max_sublayers_minus1; i++ ) { | |
| **spti_sublayer_source_picture_interval_scale_factor**[ i ] | ue(v) |
| **spti_sublayer_synthesized_picture_flag**[ i ] | u(1) |
| } | |
| } | |
| } | |
| } | |
| } | |
| } | |

spti_sublayer_source_picture_interval_scale_factor[i] may indicate a scale factor used in determining the source picture interval of corresponding consecutive pictures in output order in the CLVS having TemporalId less than or equal to i. for spti_sublayer_source_picture_interval_scale_factor[i] equal to 0 may indicate that the source picture corresponding to the current decoded output picture is identical to the source picture corresponding to the previous decoded output picture. When not present, the value of spti_sublayer_source_picture_interval_scale_factor[ i ] is inferred to be equal to 1.

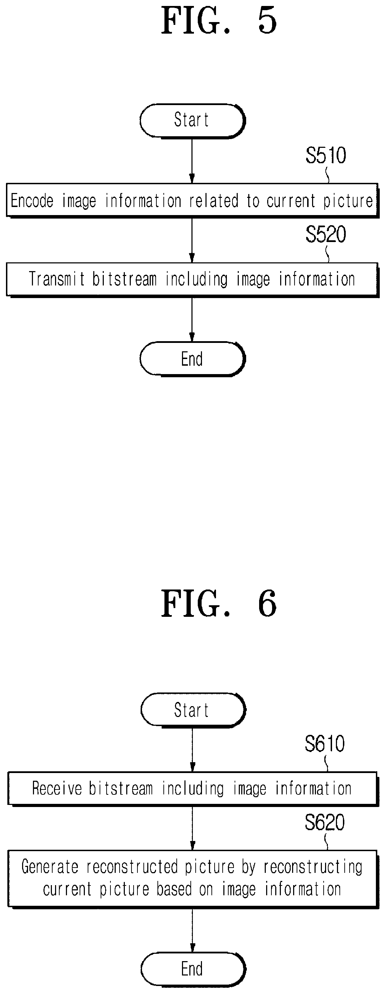

FIG. 5 is a flowchart of an image encoding method according to the present disclosure. Referring to FIG. 5, the image encoding apparatus 100 may encode image information related to a current picture (S510). Thereafter, the image encoding apparatus 100 may transmit a bitstream including the image information (S530). That is, the image encoding apparatus 100 may transmit the bitstream including the image information to the image decoding apparatus 200.

Here, the image information may include an SPTI SEI message related to a temporal interval between source pictures associated with corresponding decoded pictures. The SPTI SEI message may include persistence information specifying whether the SPTI SEI message applies only to the current decoded picture. Here, the persistence information may be spti_persistence_flag.

In addition, the SPTI SEI message may include at least one of: first information specifying a maximum number of temporal sublayers, second information specifying a scale factor used in determining the temporal interval between the source pictures corresponding to the decoded pictures, or third information specifying whether the current decoded picture included in a temporal sublayer is synthesized. Here, the first information may be spti_max_sublayers_minus1. The second information may be spti_sublayer_source_picture_interval_scale_factor[i]. The third information may be spti_sublayer_synthesized_picture_flag[i].

According to an embodiment of the present disclosure, the first information, the second information, and/or the third information may be signaled based on whether the SPTI SEI message applies only to the current decoded picture. Specifically, the first information, the second information, and/or the third information may be signaled when the SPTI SEI message is not only applied to the current decoded picture.

According to an embodiment of the present disclosure, the second information and/or the third information may be signaled further based on the maximum number of temporal sublayers. When the value of the scale factor used in determining the temporal interval between the source pictures corresponding to the decoded pictures is 1, the signaling of the second information may be skipped.

According to an embodiment of the present disclosure, when the SPTI SEI message applies only to the current decoded picture, a source picture interval may be set to be equal to an elemental source picture interval.

FIG. 6 is a flowchart of an image decoding method according to the present disclosure. Referring to FIG. 6, the image decoding apparatus 200 may receive a bitstream including image information (S610). Thereafter, the image decoding apparatus 200 may generate a reconstructed picture by reconstructing a current picture based on the image information (S630).

Here, the image information may include an SPTI SEI message related to a temporal interval between source pictures associated with corresponding decoded pictures. In addition, the SPTI SEI message may include persistence information specifying whether the SPTI SEI message applies only to the current decoded picture. Here, the persistence information may be spti_persistence_flag.

In addition, the SPTI SEI message may include at least one of: first information specifying a maximum number of temporal sublayers, second information specifying a scale factor used in determining the temporal interval between the source pictures corresponding to the decoded pictures, or third information specifying whether the current decoded picture included in a temporal sublayer is synthesized. Here, the first information may be spti_max_sublayers_minus1. The second information may be spti_sublayer_source_picture_interval_scale_factor[i]. The third information may be spti_sublayer_synthesized_picture_flag[i].

According to an embodiment of the present disclosure, the first information, the second information, and/or the third information may be obtained based on a value of the persistence information. For example, the first information, the second information, and/or the third information may be obtained based on the persistence information specifying that the SPTI SEI message is not only applied to the current decoded picture.

According to an embodiment of the present disclosure, the second information and/or the third information may be further based on a value of the first information. When the second information is not obtained, the value of the second information may be inferred to be equal to 1.

According to an embodiment of the present disclosure, based on the persistence information specifying that the SPTI SEI massage applies only to the current decoded picture, a source picture interval may be set to be equal to an elemental source picture interval.

Exemplary methods of the present disclosure are expressed as a series of operations for clarity of description, but this is not intended to limit the order in which steps are performed. The steps may be performed simultaneously or in a different order if necessary. To implement the methods according to the present disclosure, other steps may be additionally included in addition to the illustrated steps, or some steps may be excluded while the remaining steps are included. Alternatively, some steps may be excluded and other steps may be additionally included.

In the present disclosure, the image encoding apparatus 100 or the image decoding apparatus 200 performing a predetermined operation (step) may perform an operation (step) of checking the execution condition or situation of the operation (step). For example, when it is described that the predetermined operation is performed when a predetermined condition is satisfied, the image encoding apparatus 100 or the image decoding apparatus 200 may perform the predetermined operation after checking whether the predetermined condition is satisfied.

Various embodiments of the present disclosure are not intended to enumerate all possible combinations, but rather to describe representative aspects of the present disclosure, and the matters described in the various embodiments may be applied independently or in a combination of two or more thereof.

Various embodiments of the present disclosure may be implemented by hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

In addition, the image decoding apparatus 200 and the image encoding apparatus 100 to which embodiments of the present disclosure are applied may be included in a multimedia broadcasting transceiver, a mobile communication terminal, a home cinema video device, a digital cinema video device, a surveillance camera, a video chat device, and a real time communication device such as video communication, a mobile streaming device, a storage medium, a camcorder, a video on demand (VoD) service provider, an over the top video (OTT) device, an internet streaming service provider, a 3D video device, an video call video device, and a medical video device, and may be used to process an image signal or data. For example, the OTT video device may include a game console, a Blu-ray player, an Internet-connected TV, a home theater system, a smartphone, a tablet PC, and a digital video recoder (DVR).

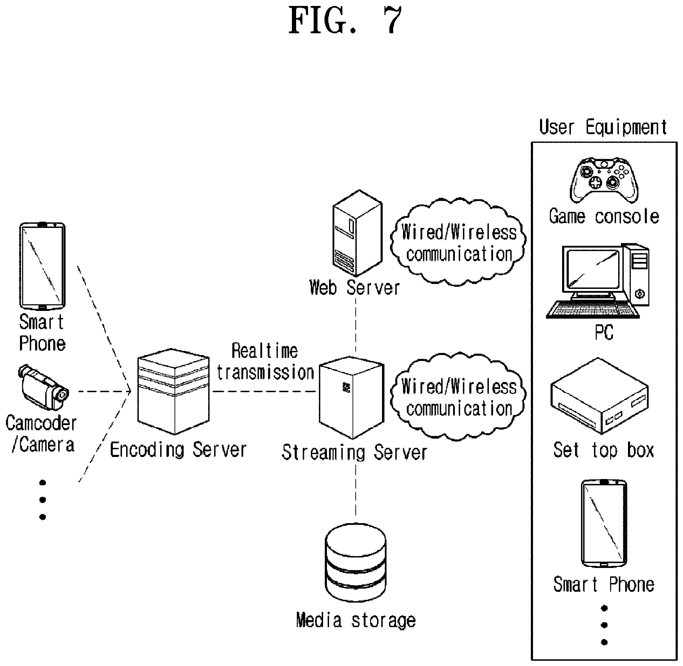

FIG. 7 is a diagram illustrating an exemplary content streaming system to which embodiments of the present disclosure are applicable.

As shown in FIG. 7, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus 100, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user devices may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktop computers, digital signage, and the like.

Each server in the content streaming system may be operated as a distributed server, in which case data received from each server may be distributed.

The scope of the disclosure includes software or machine-executable instructions (e.g., an operating system, an application, firmware, a program, etc.) for enabling operations according to the methods of various embodiments to be executed on an apparatus or a computer, a non-transitory computer-readable medium having such software or instructions stored thereon and executable on the apparatus or the computer.

### [Industrial Applicability]

Embodiments according to the present disclosure may be used to encode/decode an image.

## Claims

1. An image decoding method performed by an image decoding apparatus, the image decoding method comprising:
receiving a bitstream including image information; and
generating a reconstructed picture by reconstructing a current picture based on the image information,
wherein the image information includes a Source Picture Timing Information (SPTI) SEI message related to a temporal interval between source pictures associated with corresponding decoded pictures of the source pictures.

2. The method of claim 1, wherein the SPTI SEI message includes persistence information specifying whether the SPTI SEI message applies only to the current decoded picture.

3. The method of claim 2, wherein the SPTI SEI message includes at least one of:
first information specifying a maximum number of temporal sublayers;
second information specifying a scale factor used in determining the temporal interval between the source pictures; or third information specifying whether the current decoded picture included in a temporal sublayer is synthesized.

4. The method of claim 3, wherein the first information, the second information, and the third information are obtained based on the persistence information.

5. The method of claim 4, wherein the first information, the second information, and the third information are obtained based on the persistence information specifying that the SPTI SEI message is not only applied to the current decoded picture.

6. The method of claim 4, wherein the second information and the third information are obtained further based on a value of the first information.

7. The method of claim 4, wherein, based on the second information not being obtained, a value of the second information is inferred to be equal to 1.

8. The method of claim 1, wherein, based on the persistence information specifying that the SPTI SEI massage applies only to the current decoded picture, a source picture interval is set to be equal to an elemental source picture interval.

9. An image encoding method performed by an image encoding apparatus, the image encoding method comprising:
generating image information related to a current picture, and
encoding a bitstream including the image information,
wherein the image information includes a Source Picture Timing Information (SPTI) SEI message related to a temporal interval between source pictures associated with corresponding decoded pictures of the source pictures.

10. A non-transitory computer readable medium storing a bitstream generated by the image encoding method of claim 9.

11. A method of transmitting a bitstream generated by an image encoding method, the image encoding method comprising:
generating image information related to a current picture, and
encoding the bitstream including the image information,
wherein the image information includes a Source Picture Timing Information (SPTI) SEI message related to a temporal interval between source pictures associated with corresponding decoded pictures of the source pictures.
